# EUROPEAN PATENT SPECIFICATION

(11) **EP 1 878 874 B1**
(45) Date of publication and mention of the grant of the patent: **27.06.2012**
(21) Application number: 07252702.1
(22) Date of filing: 05.07.2007
(51) Int. Cl.: F01D 5/18

(54) **Integral main body-tip microcircuit for blades**
Integrierte Mikrokanäle für Schaufeln
Microcanaux intégrés pour aubes

(30) Priority: 10.07.2006 US 484143
(43) Date of publication of application: 16.01.2008
(73) Proprietor: United Technologies Corporation, Hartford, CT 06101 (US)
(72) Inventor: Cunha, Francisco J., Avon, CT 06001 (US); Abdel-Messeh, William, Middletown, CT 06457 (US)
(74) Representative: Leckey, David Herbert

(56) References cited:
- EP-A1- 1 101 899
- EP-A1- 1 288 439
- EP-A1- 1 577 498
- EP-A2- 1 445 424

## Description

### BACKGROUND OF THE INVENTION

### (1) Field of the Invention

The present invention relates to a cooling microcircuit for use in a turbine engine component such as a turbine blade.

### (2) Prior Art

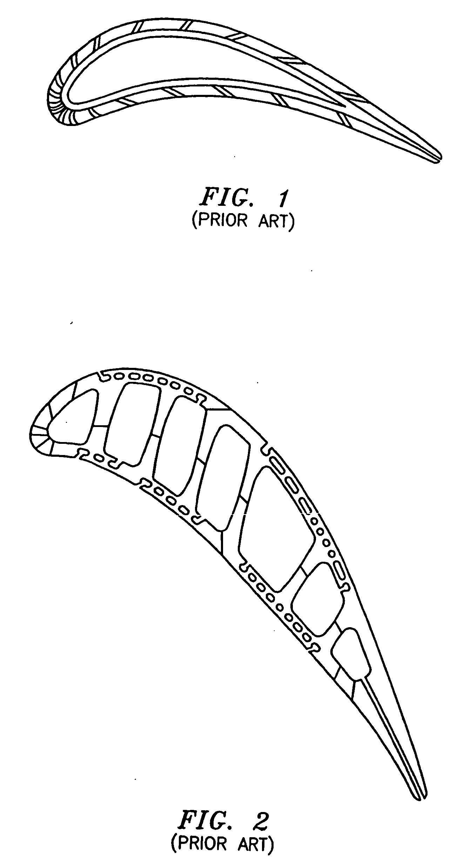

As it can be appreciated from FIGS. 1 and 2, prior art turbine blades have a plurality of cavities with each blade internal cavity feeding a cooling microcircuit located on a side of the airfoil, either on a pressure side or on a suction side. For blade cooling designs with double wall construction, or imbedded microcircuits in the airfoils, such as those illustrated in FIGS. 1 and 2, the flow in the internal supply cavities assume relatively low Mach number distribution when compared to more conventional serpentine cooling designs. Due to these low Mach numbers, the rotational forces, resulting from the angular speeds of the rotor, become predominant. This, in turn, induces a series of cavity vortices inside the supply cavities. Since the internal cavities supply coolant air to the microcircuits embedded in the wall, the location of these supply links, between cavity and microcircuit, become extremely important.

There are two possible ways to solve this problem. First, one can determine the characteristics of these in-plane secondary vortices in a way so as to facilitate access of the cooling air into the microcircuits. Second, one can de-sensitize the microcircuit cooling to the supply links by having one supply cavity per microcircuit. If neither of these options is followed, a concern exists of having multiple feeds from one internal cavity to more than one microcircuit, which would lead to a flow imbalance.

In the FIGS. 1 and 2, there is shown an airfoil with embedded wall circuits having cooling supply flows from a large internal cavity. In the configuration shown, the embedded circuits on the pressure side would experience a relative lower flow compared to those on the suction side. As a result the cooling effectiveness is much lower on the pressure side than on the suction side.

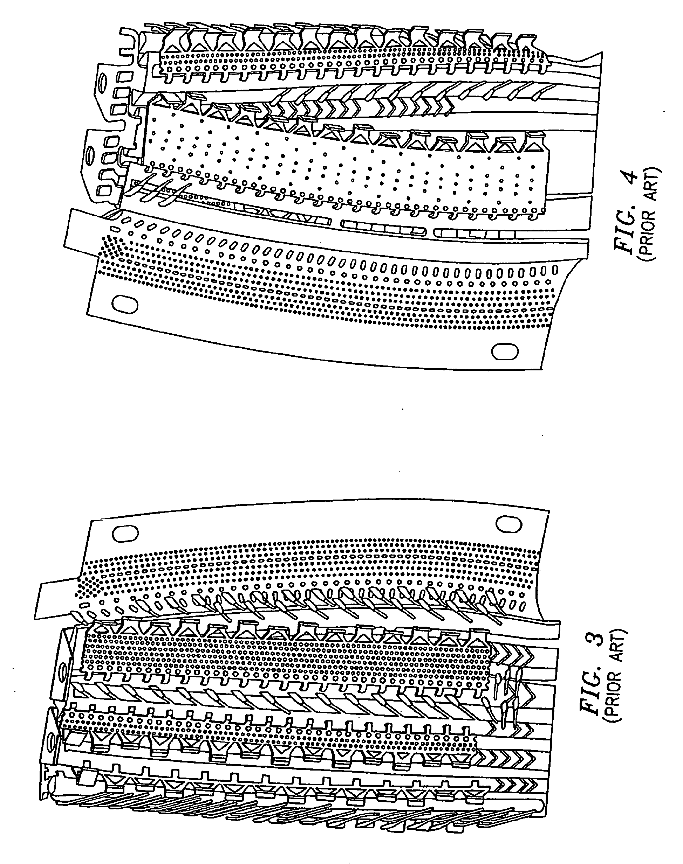

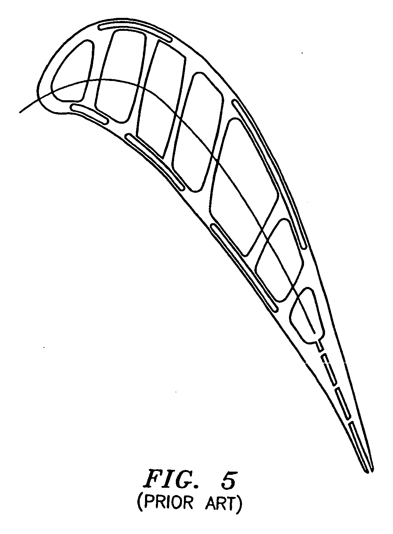

The simpler option is the second option above where a blade is designed to have dedicated and independent cooling supplies to each microcircuit. As a result, the microcircuit flow cooling characteristics are then de-sensitized from potential high rotational effects and other interferences. As a consequence of this cooling design philosophy, seven internal large cavities were cored for the turbine blade of FIG. 1, leading to six internal ribs within the airfoil portion. The existence of several cold ribs is particularly significant for this application, as cold ribs provide increased creep capability for the airfoil. However, as illustrated in FIGS. 3 - 5, the direct relationship of one microcircuit per supply cavity leads to potential assembly issues when microcircuit cores are tied-in with the main-body cores of the supply cavities during the pre-casting operation. In addition, the cooling microcircuit is a separate and independent circuit.

Thus, there remains a problem of core assembly to be solved when designing cooling microcircuits for turbine engine components such as turbine blades.

EP-A-1445424 discloses a turbine engine component having the features of the preamble of claim 1.

### SUMMARY OF THE INVENTION

In accordance with the present invention, there is provided a solution to the core assembly problem which also takes advantage of the isolation of each microcircuit from a total independent supply.

In accordance with the present invention, there is provided a turbine engine component as set forth in claim 1.

Other details of the integral main body-tip microcircuits for blades of the present invention, as well as other advantages attendant thereto, are set forth in the following detailed description and the accompanying drawings wherein like reference numerals depict like elements.

### BRIEF DESCRIPTION OF THE DRAWINGS

FIG. 1 is an illustration of a prior art turbine blade having internal blade cavities for separate imbedded airfoil wall microcircuits;
FIG. 2 is an illustration of a prior art turbine blade having dedicated supply cavities per microcircuit to avoid cooling effectiveness debits;
FIG. 3 is an illustration of a portion of a prior art turbine blade having three pressure side microcircuits;
FIG. 4 is an illustration of a portion of a prior art turbine blade having two suction side microcircuits;
FIG. 5 is an illustration of a prior art turbine blade having a trailing edge microcircuit; and
FIG. 6 is an illustration of a turbine blade having a serpentine airfoil microcircuit supplied from the blade root and integrated main mid-body with tip microcircuit as one unit.

### DETAILED DESCRIPTION OF THE PREFERRED EMBODIMENT(S)

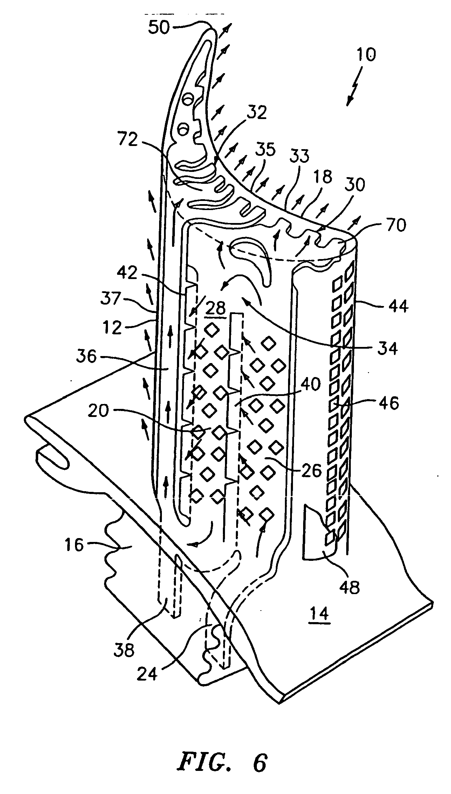

To solve the problem of core assembly, while taking advantage of the isolation of each microcircuit from a total independent supply, the cooling scheme of FIG. 6 is presented. As shown in this figure, there is provided a turbine engine component 10, such as a turbine blade, having an airfoil portion 12, a platform 14, and a root portion 16. The airfoil portion 12 has a tip 18. A cooling microcircuit 20 is imbedded within the airfoil portion 12. The imbedded cooling microcircuit 20 receives a coolant flow stream from an inlet 24 formed within the root portion 16. The inlet 24 is preferably positioned adjacent a leading edge of the root portion 16. The inlet 24 may communicate with any suitable source of cooling fluid such as engine bleed air. The coolant flow stream is allowed to flow radially upward (in a direction away from the platform 14) through a first leg 26 of the cooling microcircuit 20 so as to take advantage of the natural pumping force. As can be seen from FIG. 6, the cooling microcircuit 20 may have a serpentine configuration. Thus, as the coolant flow stream reaches the vicinity of the tip 18 of the airfoil portion 12, the coolant flow bends and proceeds to a second leg 28. Within the second leg 28, the coolant flows radially downward (in a direction toward the platform 14). In this arrangement, some bypass coolant flow may be used to cool the tip 18 via tip cooling circuits 30 and 32. As shown in FIG. 6, the tip cooling circuit 30 comprises a plurality of spaced apart flow passages 70. Each flow passage 70 has an inlet which may communicate with and receive coolant from the first leg 26 as well as from a U-shaped flow turn portion 34 connecting the legs 26 and 28.

The cooling microcircuit 30 may be provided with a third leg 36 in which the coolant flows radially upward. The tip circuit 32 also may comprise a plurality of spaced apart flow passages 72. Each flow passage 72 may have an inlet which communicates with the third leg 36 of the cooling microcircuit 20 so as to receive coolant therefrom. Each cooling circuit passage 70 and 72 has a fluid outlet or exit 33 which allows cooling fluid to flow over a surface of the airfoil portion 12. Preferably, the exits 33 are configured to allow the coolant to exit on the pressure side 35 of the airfoil portion 12. The tip cooling exits 33 from the circuits 30 and 32 may extend from a point near the leading edge 44 to a point near the trailing edge 50 of the airfoil portion 12. By providing the cooling microcircuit arrangement described herein, three separate circuits make up one unit and thus facilitate the assembly process.

A root inlet refresher leg 38 may be fabricated within the root portion 16. The root inlet refresher leg 38 is in fluid communication with the third leg 36 and may be used to insure adequate cooling flow in the third leg 36. The root inlet refresher leg 38 may communicate with any suitable source (not shown) of cooling fluid such as engine bleed air.

As can be seen from the foregoing description, an integral main body and tip microcircuit arrangement 20 has been provided. The turbine engine component 10 is cooled convectively in this way.

If desired, exit tabs 40 forming film slots 42 may be provided in the legs 26 and/or 28. The exit tabs 40 and film slots 42 allow coolant fluid to flow from the legs 26 and/or 28 onto a surface of the airfoil portion. The surface may be the pressure side surface 35 or the suction side surface 37. Fluid exiting the slots 42 helps form a cooling film over one or more of the exterior surfaces of the turbine engine component 10. Such film slots 42 may be useful in an open-cooling system.

If desired, the leading edge 44 of the airfoil portion 12 may be provided with a plurality of fluid outlets or exits 46 which allow a film of coolant to flow over the leading edge portions of the pressure side 35 and the suction side 37 of the airfoil portion 12. The outlets or exits 46 may be supplied with coolant from a supply cavity 48. The supply cavity 48 may communicate directly with a source (not shown) of cooling fluid, such as engine bleed air, or alternatively, the supply cavity 48 may be in fluid communication with the first leg 26.

The cooling microcircuit of the present invention may also be used in a closed loop system without film cooling for industrial gas turbine applications where the external thermal load is not as high as that for aircraft engine applications.

The cooling microcircuit arrangement of the present invention may be formed using any suitable technique known in the art. In a preferred method of forming the cooling microcircuit, one or more sheets formed from a refractory metal material may be configured in the shape of the cooling microcircuit arrangement 20 including the inlet 24 and the root inlet refresher leg 38, the legs 26, 28, and 36, the tip cooling microcircuits 30 and 32, the exits 33, the tabs 40, and the film slots 42. The refractory metal material sheets may be placed or positioned within a mold cavity. Thereafter, the turbine engine component 10 including the airfoil portion 12, the platform 14, and the root portion 16 may be cast from any suitable metal known in the art such as a nickel based superalloy, a titanium based superalloy, or an iron based superalloy. After the turbine engine component has been cast, the refractory metal material sheets may be removed using any suitable means known in the art, leaving the cooling microcircuit arrangement 20 of the present invention.

## Claims

1. A turbine engine component (10) comprising:
an airfoil portion (12) having a tip (18) and a root portion (16);
a cooling microcircuit arrangement (20) within said airfoil portion (12); and
said cooling microcircuit arrangement (20) comprising a serpentine multi-leg main body portion for allowing a flow of coolant to convectively cool said airfoil portion (12) and at least one integrally formed tip cooling microcircuit (30,32); **characterised**
**in that** it further comprises a coolant inlet (24) extending through said root portion (16) and communicating with said multi-leg main body portion, said coolant inlet (24) being located adjacent a leading edge of said root portion (16);
**in that** said multi-leg main body portion has a first leg (26) which allows coolant from said coolant inlet (24) to flow radially upwards towards said tip (18), a second leg (28) which receives coolant from said first leg (26) and in which said coolant flows radially downward, and a third leg (36) in which coolant moves radially upward;
and **in that** said at least one integrally formed cooling microcircuit (30) includes at least one microcircuit in fluid communication with said first leg (26) and at least one tip cooling microcircuit (32) communicating with said third leg (36).

2. The turbine engine component according to claim 1, comprising a plurality of integrally formed cooling microcircuits (30) in fluid communication with said first leg (26),

3. The turbine engine component according to claim 1 or 2, further comprising a plurality of film cooling slots (42) located between said first leg (26) and said second leg (28) for allowing coolant to flow over a surface of said airfoil portion (12).

4. The turbine engine component according to any preceding claim, further comprising a refresher inlet (38) extending within said root portion (16) and supplying coolant to said third leg (36).

5. The turbine engine component according to any preceding claim, comprising a plurality of tip cooling microcircuits (32) communicating with said third leg (36).

6. The turbine engine component according to any preceding claim, wherein each said tip cooling microcircuit (30,32) has an exit for allowing cooling fluid to flow over a pressure side surface (35) of said airfoil portion (12).

7. The turbine engine component according to any preceding claim, further comprising a platform (14) positioned intermediate said airfoil portion (12) and said root portion (16).

8. The turbine engine component according to any preceding claim, further comprising said airfoil portion (12) having a leading edge (44), a pressure side wall (35), and a suction side wall (37), and said leading edge (44) having a plurality of fluid outlets (46) for allowing said coolant to flow over at least one of a leading edge portion of the pressure side wall and a leading edge portion of the suction side wall.

## Patentansprüche

1. Turbinenmaschinenkomponente (10) umfassend:
einen Strömungsprofilbereich (12), der eine Spitze (18) und einen Wurzelbereich (16) aufweist;
eine Kühlungsmikrokreislaufanordnung (20) innerhalb des Strömungsprofilbereichs (12); und
wobei die Kühlungsmikrokreislaufanordnung (20) einen Serpentinenmehrfachweg-Hauptkörperbereich umfasst, um es einem Strom von Kühlmittel zu erlauben, den Strömungsprofilbereich (12) konvektiv zu kühlen, und zumindest einen integral ausgebildeten Spitzen-Kühlungsmikrokreislauf (30, 32);
**dadurch gekennzeichnet,**
**dass** die Turbinenmaschinenkomponente des Weiteren einen Kühlmitteleinlass (24) umfasst, der sich durch den Wurzelbereich (16) erstreckt und mit dem Multiweghauptkörperbereich in Verbindung steht, wobei der Kühlmitteleinlass (24) benachbart einer Vorderkante des Wurzelbereichs (16) angeordnet ist;
**dass** der Multiweghauptkörperbereich einen ersten Weg (26), der es Kühlmittel erlaubt von dem Kühlmitteleinlass (24) radial aufwärts hin zu der Spitze (18) zu strömen, einen zweiten Weg (28), der Kühlmittel von dem ersten Weg (26) empfängt und in welchem das Kühlmittel radial abwärts strömt, und einen dritten Weg (36) aufweist, in welchem sich Kühlmittel radial aufwärts bewegt;
und **dadurch**, dass der zumindest eine integral ausgebildete Kühlungsmikrokreislauf (30) zumindest einen Mikrokreislauf in Fluidverbindung mit dem ersten Weg (26) und zumindest einen Spitzen-Kühlungsmikrokreislauf (32) beinhaltet, der mit dem dritten Weg (36) in Verbindung steht.

2. Turbinenmaschinenkomponente nach Anspruch 1, umfassend eine Mehrzahl von integral ausgebildeten Kühlungsmikrokreisläufen (30) in Fluidverbindung mit dem ersten Weg (26).

3. Turbinenmaschinenkomponente nach Anspruch 1 oder 2, des Weiteren umfassend eine Mehrzahl von Filmkühlungsaussparungen (42), die zwischen dem ersten Weg (26) und dem zweiten Weg (28) angeordnet sind, um es Kühlmittel zu erlauben, über eine Fläche des Strömungsprofilbereichs (12) zu strömen.

4. Turbinenmaschinenkomponente nach einem der vorangehenden Anspruche, des Weiteren umfassend einen Auffrischungseinlass (38), der sich innerhalb des Wurzelbereichs (16) erstreckt und dem dritten Weg (36) Kühlmittel zuführt.

5. Turbinenmaschinenkomponente nach einem der vorangehenden Ansprüche, umfassend eine Mehrzahl von Spitzen-Kühlungsmikrokreisläufen (32), die mit dem dritten Weg (36) in Verbindung stehen.

6. Turbinenmaschinenkomponente nach einem der vorangehenden Ansprüche, wobei der Spitzen-Kühlungsmikrokreislauf (30, 32) einen Ausgang aufweist, um es Kühlungsfluid zu erlauben, über eine Druckseitenfläche (35) des Strömungsprofilbereichs (12) zu strömen.

7. Turbinenmaschinenkomponente nach einem der vorangehenden Ansprüche, des Weiteren umfassend eine Plattform (14), die zwischen dem Strömungsprofilbereich (12) und dem Wurzelbereich (16) angeordnet ist.

8. Turbinenmaschinenkomponente nach einem der vorangehenden Ansprüche, des Weiteren umfassend den Strömungsprofilbereich (12), der eine Vorderkante (44), eine Druckseitenwand (35) und eine Saugseitenwand (37) aufweist, und wobei die Vorderkante (44) eine Mehrzahl von Fluidauslässen (46) aufweist, um es dem Kühlmittel zu erlauben, über zumindest einen Vorderkantenbereich der Druckseitenwand und einen Vorderkantenbereich der Saugseitenwand zu strömen.

## Revendications

1. Composant (10) de moteur à turbine comportant :
une partie (12) de profil aérodynamique dotée d'un bout (18) et d'une partie (16) d'emplanture ;
un agencement (20) de microcircuit de refroidissement à l'intérieur de ladite partie (12) de profil aérodynamique ; et
ledit agencement (20) de microcircuit de refroidissement comportant une partie multi-branches sinueuse de corps principal destinée à permettre à un écoulement d'agent de refroidissement de refroidir par convection ladite partie (12) de profil aérodynamique,
et au moins un microcircuit (30, 32) de refroidissement du bout formé de manière intégrée ; **caractérisé en ce qu'**il comporte en outre une entrée (24) d'agent de refroidissement s'étendant à travers ladite partie (16) d'emplanture et communiquant avec ladite partie multi-branches sinueuse de corps principal, ladite entrée (24) d'agent de refroidissement étant située au voisinage d'un bord d'attaque de ladite partie (16) d'emplanture ;
**en ce que** ladite partie multi-branches sinueuse de corps principal comprend une première branche (26) qui permet à de l'agent de refroidissement en provenance de ladite entrée (24) d'agent de refroidissement de s'écouler radialement vers le haut en direction dudit bout (18), une deuxième branche (28) qui reçoit de l'agent de refroidissement en provenance de ladite première branche (26) et dans laquelle ledit agent de refroidissement s'écoule radialement vers le bas, et une troisième branche (36) dans laquelle l'agent de refroidissement progresse radialement vers le haut ;
et **en ce que** ledit ou lesdits microcircuits (30) de refroidissement formés de manière intégrée comprennent au moins un microcircuit en communication fluidique avec ladite première branche (26) et au moins un microcircuit (32) de refroidissement du bout communiquant avec ladite troisième branche (36).

2. Composant de moteur à turbine selon la revendication 1, comportant une pluralité de microcircuits (30) de refroidissement formés de manière intégrée en communication fluidique avec ladite première branche (26).

3. Composant de moteur à turbine selon la revendication 1 ou 2, comportant en outre une pluralité de fentes (42) de refroidissement par film situées entre ladite première branche (26) et ladite deuxième branche (28) pour permettre à de l'agent de refroidissement de s'écouler par-dessus une surface de ladite partie (12) de profil aérodynamique.

4. composant de moteur à turbine selon l'une quelconque des revendications précédentes, comportant en outre une entrée (38) de rafraîchissement s'étendant à l'intérieur de ladite partie (16) d'emplanture et fournissant de l'agent de refroidissement à ladite troisième branche (36).

5. composant de moteur à turbine selon l'une quelconque des revendications précédentes, comportant une pluralité de microcircuits (32) de refroidissement du bout communiquant avec ladite troisième branche (36).

6. Composant de moteur à turbine selon l'une quelconque des revendications précédentes, chacun desdits microcircuits (30, 32) de refroidissement du bout étant doté d'une sortie destinée à permettre à permettre à du fluide de refroidissement de s'écouler par-dessus une surface (35) d'intrados de ladite partie (12) de profil aérodynamique.

7. Composant de moteur à turbine selon l'une quelconque des revendications précédentes, comportant en outre une plate-forme (14) positionnée de façon intermédiaire entre ladite partie (12) de profil aérodynamique et ladite partie (16) d'emplanture.

8. Composant de moteur à turbine selon l'une quelconque des revendications précédentes, comportant en outre ladite partie (12) de profil aérodynamique dotée d'un bord d'attaque (44), d'une paroi (35) d'intrados et d'une paroi (37) d'extrados, et ledit bord d'attaque (44) étant doté d'une pluralité de sorties (46) de fluide destinées à permettre audit agent de refroidissement de s'écouler par-dessus une partie de bord d'attaque de la paroi d'intrados et/ou une partie de bord d'attaque de la paroi d'extrados.
